# EUROPÄISCHE PATENTSCHRIFT

(11) **EP 0 982 504 B1**
(45) Veröffentlichungstag und Bekanntmachung des Hinweises auf die Patenterteilung: **17.01.2001**
(21) Anmeldenummer: 99114967.5
(22) Anmeldetag: 30.07.1999
(51) Int. Cl.: F16B 7/06

(54) **Laschenausbildung zum Schutz gegen Spreizen und Beschädigen von Beschichtungen**
Shackle-tongue construction for protection against splaying and damage of coatings
Configuration d'éclisse pour la protection contre l'écartement et l'endommagement de revêtements

(30) Priorität: 24.08.1998 DE 19838208; 27.01.1999 DE 19903076
(43) Veröffentlichungstag der Anmeldung: 01.03.2000
(73) Patentinhaber: Betschart, Anton-Peter, Dr.-Ing., 73087 Bad Boll (DE)
(72) Erfinder: Betschart, Anton-Peter, Dr.-Ing., 73087 Bad Boll (DE)

(56) Entgegenhaltungen:
- DE-C- 3 903 281
- US-A- 5 599 056

## Beschreibung

Die Erfindung betrifft eine Laschenausbildung bei einem Stabanker für Zugstabsysteme nach dem Oberbegriff des Hauptanspruchs 1.

Die Erfindung findet für allgemeine Zwecke in der Bautechnik Verwendung.

Durch die DE 39 03 281 ist ein Stabanker bekannt geworden, in dessen Maul ein Anschlussblech über einen Querbolzen gefügt wird. Die Herstellung erfolgt durch Giessen, Schmieden oder mechanische Bearbeitung. Die zwei im Abstand zueinander angeordneten Laschen weisen von der Bolzenbohrung bis zum anschliessenden Ende zum Schaft eine mittels einer Abschrägung verbreiterte Maulweite auf, um ein Spreizen infolge von Toleranzen der axial einzufügenden Blechdicken zu verhindern. Im Bereich zwischen der belasteten Bolzenbohrung bis zum freien Ende hin verläuft die Maulweite jedoch parallel. Dies setzt eine exakt in der Stabachse verlaufende Anordnung der Anschlussbleche voraus. In der Praxis sind die Anschlussbleche jedoch selten axial sondern meistens anaxial bzw. schief angeordnet. Wegen des parallelen Bereichs entstehen dadurch unerwünschte Spreizungen, die zu erheblichen Verformungen führen, woraus besonders im Übergangsbereich der Laschen zum Schaft sicherheitsmindernde Spannungen und Kraftverlagerungen entstehen, die zu gefährlichen Rissbildungen führen können. Ein weiterer Nachteil ist, dass durch die Spreizung die Spaltbreiten zwischen den beiden Laschen und dem Anschlussblech im tragenden Bereich des Bolzens vergrössert werden. Dadurch nimmt die Bolzenbiegung erheblich zu, so dass im Extremfall die Laschen nach aussen rutschen und der Bolzen mit dem Anschlussblech durch die beiden Laschen gezogen wird. Nachteilig ist weiterhin, dass sich wegen der grösseren Bolzenbiegung die Übertragungskraft vermindert und eine unzulässige Verlängung in axialer Richtung entsteht, was zu schwerwiegenden Verformungen der Gesamtkonstruktion führen kann.

In der DE 39 34 531 C2 ist eine Ausführung bekannt geworden, bei der die Vorderkanten der Laschen abgeschrägt sind um das Einführen des Anschlussbleches zu erleichtern. Die Schräge führt jedoch nicht um die gesamten Kanten der Lascheninnenflächen herum, wie es für den Schutz der Beschichtung erforderlich ist. Auch ein blosses "Brechen" der Kanten ist hierfür nicht ausreichend.

Bei herkömmlichen Ausführungen, wie z.B. in der DE 39 22 070 C1, sind in der Praxis die Kanten an den zur Maulweite zugewandten Lascheninnenflächen scharfkantig. Dabei ist nachteilig, dass beim Einschieben der Anschlussbleche die Beschichtung bzw. der Korrosionsschutz so stark abgeschält und verletzt wird, dass der Korrosionsschutz an diesen nach dem Einbau unzugänglichen Stellen nicht mehr gewährleistet ist. Bei der Gussausführung entsteht durch das notwendige Reinigungsstrahlen nach innen zur Maulweite hin ein besonders scharfkantiger Grat, der die Verletzung der Oberfläche noch verstärkt. Ein Wegschleifen geschieht in der Praxis nicht, da dieses wegen der schlechten Zugänglichkeit zwischen den Laschen sehr zeitaufwendig und überaus gefährlich ist.

Die Sicherheit der gesamten Zugstabkonstruktion ist durch diese Nachteile gefährdet.

Aufgabe der Erfindung ist es daher, die Laschen derart auszubilden, dass sich anaxial angeordnete Anschlussbleche nicht mehr negativ auswirken. Eine weitere Aufgabe der Erfindung ist es, die Kanten zu den Lascheninnenflächen derart auszubilden, dass ein Verletzen der Beschichtung verhindert wird.

Die Aufgabe wird erfindungsgemäss durch die Merkmale des Anspruchs 1 gelöst. Ausgestaltungen der Erfindung ergeben nach aus dem Anspruch 2.

Im folgenden wird die Erfindung anhand von möglichen, in den Zeichnungen dargestellten Beispielen erläutert.

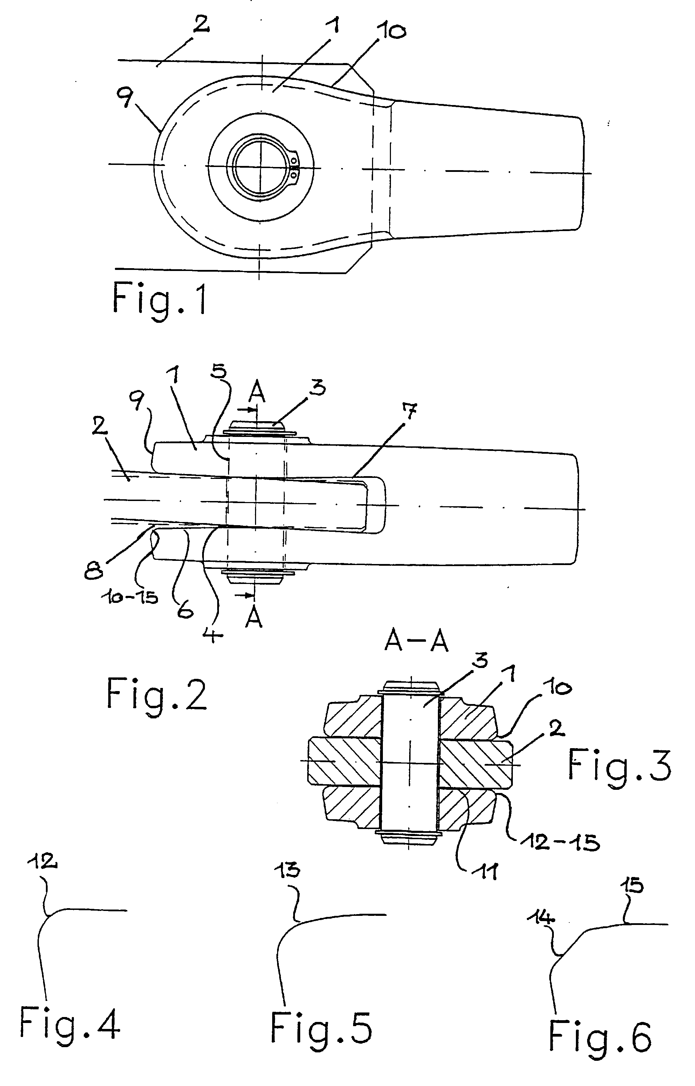

Es zeigen
**Fig. 1** eine Draufsicht eines Stabankers
**Fig. 2** eine Seitenansicht eines Stabankers
**Fig. 3** ein Schnitt durch einen Stabanker
**Fig. 4** eine runde Laschenkante
**Fig. 5** eine parabelförmige, zur Lascheninnenfläche sanft auslaufende Laschenkante
**Fig. 6** eine fasenförmige, zur Lascheninnenfläche sanft auslaufende Laschenkante.

Um zu verhindern, dass sich bei anaxial angeordneten Anschlussblechen (**2**) die Laschen (**1**) spreizen können, wird ab der Lochleibung (**5**) die Lascheninnenseite bis zum freien Ende (**9**) hin mit einer Abschrägung (**6**) versehen. In Verbindung mit der in der DE 39 03 281 bekannt gewordenen Verbreiterung (**7**) der Maulweite im Bereich vom Bolzen (**3**) zum Schaft hin, können anaxial angeordnete Anschlussbleche (**2**) nicht mehr sicherheitsmindernd wirken. Die Abschrägung (**6**) zum freien Ende (**9**) hin, verhindert auch eine Verbreiterung der.Spaltbreite (**4**) zwischen dem Anschlussblech (**2**) und den beiden Laschen (**1**), so dass die Bolzenbiegung nicht vergrössert wird. Die Tragfähigkeit und die garantierte Sicherheit der Zugstabkonstruktion wird dadurch auch bei anaxial angeordneten Anschlussblechen gewährleistet.

Um ein Verletzen des Korrosionsschutzes zu verhindern ist nach mehreren Lösungen in Anspruch 2 die der Maulweite zugewandte Laschenkante (**10**) derart gestaltet, dass ein Verletzen der Korrosionsschicht verhindert wird. In einer bevorzugten Lösung ist die Kante mit einer grossen Rundung (**12**) versehen. In weiteren Lösungen verläuft die Kantenausführung parabelförmig (**13**) und/oder ausgeprägt fasenförmig (**14**) in einem beliebigen Winkel. Bei allen Lösungen ist es vorteilhaft wenn der Übergang der Kantenausbildung als sanfte Kurve (**15**) in die Lascheninnenfläche übergeht um die Schutzwirkung noch zu vergrössern. Bei der Gussfertigung wird dies durch ein Versetzen der Formteilung ermöglicht.

## Patentansprüche

1. Laschenausbildung bei einem Stabanker für Zugstabsysteme, wobei die Laschenausbildung mit zwei im Abstand zueinander angeordneten Laschen (**1**) zum Fügen eines Anschlussbleches (**2**) mittels eines Bolzens (**3**) und einer vom Bereich der Bolzenbohrung zum Schaft hin verbreiterten Maulweite (**7**) gebildet ist, **dadurch gekennzeichnet**, dass die Maulweite auch zum freien Ende hin breiter wird und diese Verbreiterung (**8**) etwa ab dem Bereich der belasteten Bolzenbohrung beginnt, wobei die Maulweite in diesem Bereich zu beiden Seiten him parallel verläuft.

2. Laschenausbildung nach Anspruch 1, **dadurch gekennzeichnet**, dass die Aussenkanten (**10**) der Lascheninnenflächen (**11**) ausgeprägt rund (**12**), und/oder parabelförmig (**13**), und/oder in einem beliebigen Winkel stark fasenförmig (**14)** ausgebildet sind, wobei der Auslauf vorzugsweise als sanfte Kurve (**15**) in die Lascheninnenfläche übergehen kann.

## Claims

1. Shackle construction at a rod anchor for a tie rod system, wherein the shackle construction is formed by two straps (1), which are arranged at a spacing from one another, for the joining of a connecting plate (2) by means of a pin (3) and a jaw width (7) which widens from the region of the pin bore towards the shank, characterised in that the jaw width is also wider towards the free end and this widening (8) begins approximately from the region of the loaded pin bore, wherein the jaw width in this region runs parallelly to both sides.

2. Shackle construction according to claim 1, characterised in that the outer edges (10) of the strap inner surfaces (11) are formed to be pronouncedly round (12) and/or parabolic (13) and/or strongly chamfered (14) at a desired angle, wherein the run-out can merge into the strap inner surface preferably as a gentle curve (15).

## Revendications

1. Configuration d'éclisse sur une barre d'ancrage pour des systèmes à tirant, sachant que la configuration d'éclisse est formée par deux éclisses (1) disposées de manière espacée pour maintenir une tôle d'assemblage (2) au moyen d'un boulon (3), et par une ouverture (7) qui s'élargit à partir de la zone de perçage du boulon vers la tige, caractérisée en ce que l'ouverture s'élargit également vers l'extrémité libre et en ce que cet élargissement (8) débute approximativement à partir de la zone de perçage du boulon mis sous contrainte, sachant que l'ouverture s'étend dans cette zone parallèlement aux deux côtés.

2. Configuration d'éclisse selon la revendication 1, caractérisée en ce que les arêtes extérieures (10) des surfaces intérieures (11) des éclisses sont réalisées de façon nettement arrondie (12) et/ou parabolique (13) et/ou avec un angle quelconque en étant fortement biseautées (14), sachant que l'extrémité peut devenir la surface intérieure de l'éclisse en formant de préférence une courbe douce (15).
